# EUROPEAN PATENT SPECIFICATION

(11) **EP 4 352 158 B1**
(45) Date of publication and mention of the grant of the patent: **19.03.2025**
(21) Application number: 22733041.2
(22) Date of filing: 09.06.2022
(51) Int. Cl.: C08L 23/12, C08L 23/14

(54) **POLYPROPYLENE COMPOSITION**
POLYPROPYLENZUSAMMENSETZUNG
COMPOSITION DE POLYPROPYLÈNE

(30) Priority: 09.06.2021 EP 21178603
(43) Date of publication of application: 17.04.2024
(73) Proprietor: Borealis AG, 1020 Vienna (AT)
(72) Inventor: WANG, Jingbo, 4021 Linz (AT); GAHLEITNER, Markus, 4021 Linz (AT); POTTER, Elisabeth, 4021 Linz (AT); CIGON, Meta, 1020 Wien (AT)
(74) Representative: Dehns
(86) International application number: PCT/EP2022/065695
(87) International publication number: WO 2022/258754

(56) References cited:
- US-A1- 2021 054 181

## Description

### Field of the Invention

The present invention relates to a polypropylene composition. More specifically, the invention relates to a polypropylene composition comprising a bimodal random Ziegler-Natta propylene copolymer and at least one hindered amine light stabiliser. The invention further relates to a process for preparing the polypropylene composition and an article comprising the polypropylene composition.

### Background

Polypropylene (PP) is one of the most used plastics for packaging applications. In a continuously increasing part of this market, especially in the pharmaceutical area, but also in food packaging and especially in medical applications (syringes, pouches, tubes etc.), the material is sterilized by either heat (steam), radiation (β / electrons or γ) or chemicals (mostly ethylene oxide), which affects the mechanical and optical properties.

Among all these, the sterilization via γ-radiation is the most relevant method for sterilizing pharmaceutical, medical or diagnostic items. It is well known that radiation, mostly the effect of γ-rays, induces chain scission and degradation effects, resulting in a reduced melt viscosity and severe embrittlement. What makes this radical reaction so critical is the fact that it continues for a long time after the actual sterilization process, making long-term studies necessary for studying the effects. Various strategies have been published for a reduction of these effects. Some focus on the use of "mobilizing agents" (paraffinic oils) and special stabilizer formulations. Others combine the polypropylene with specific polyethylene qualities or other polymers, for example EP 0847420, JP 4808419 and KR 2005053937.

Sterilization effects on polypropylene, Markus Gahleitner, et.al. Proc. 9th European PLACE Conference (2003) Rome, describes changes in mechanical properties of various polypropylene homopolymers and random copolymers after irradiation at 50 kGy. These results give an indication of the mechanical properties for short periods after sterilization. However, these results do not give any indication of the long-term behaviour of irradiated polymer samples.

There is a constant need within the Health Care industry to have polymers at hand, which can be used for medical articles, withstand higher dosages of irradiation and retain mechanical properties, like impact behaviour at a higher level and for a longer time after irradiation has taken place.

WO 2018/210893 describes a unimodal random propylene copolymer with improved gamma sterilisation properties. WO 2019/197383 discloses a composition comprising a bimodal polypropylene random copolymer prepared using a metallocene catalyst together with a soluble nucleating agent, which was found to have improved resistance against gamma radiation.

US 2021/054181 A1 describes a polymer composition which is prepared by a metallocene catalyst.

The present inventors have sought new polypropylene compositions, developed in particular for the health care and medical market, which possess improved resistance for γ- irradiation. This improvement should not be at the expense of any other properties of the polymer or any article formed. Thus, other mechanical properties, e.g. stiffness or low levels of fractions soluble in cold xylene (XCS), should be maintained.

The present inventors have surprisingly found that a polypropylene composition comprising a bimodal random Ziegler-Natta copolymer together with at least one hindered amine light stabiliser offers an attractive solution. In particular, these polypropylene compositions possess attractive toughness after sterilisation. Significantly, this toughness is maintained for an extended time period indicating good gamma sterilisation stability.

### Summary of the Invention

Thus, viewed from a first aspect, the invention provides a polypropylene composition comprising:
a) a bimodal random Ziegler-Natta propylene copolymer having a comonomer content of 2.0 to 4.5 wt.-%, said copolymer comprising:
   (i) 30 to 70 wt.-% of a first propylene copolymer having a comonomer content in the range of 0.1 to 4.5 wt.-% relative to the total weight of the first propylene copolymer, and an MFR₂ of 1 to 100 g/10 min; and
   (ii) 70 to 30 wt.-% of a second propylene copolymer having a comonomer content in the range of 1.0 to 15 wt.-% relative to the total weight of the second propylene copolymer, and an MFR₂ of 1 to 100 g/10 min;
   with the proviso that the comonomer content of the second propylene copolymer (ii) is higher than that of the first propylene copolymer (i); and
b) at least one hindered amine light stabiliser.

Viewed from a further aspect, the invention provides a process for preparing a polypropylene composition as hereinbefore defined, said process comprising the steps:
a) polymerizing in a first reactor, preferably a slurry reactor, monomers comprising propylene and one or more comonomers selected from ethylene and C₄-C₁₀ alpha-olefins, to obtain a first propylene polymer fraction having a comonomer content in the range of 0.1 to 4.5 wt.-%,
b) polymerizing in a second reactor, preferably a gas-phase reactor, monomers comprising propylene and one or more comonomers selected from ethylene and C₄-C₁₀ alpha-olefins, in the presence of the first propylene polymer fraction, to obtain a second propylene polymer fraction having a comonomer content in the range of 1.0 to 15 wt.-%,
c) extruding the polymer fractions in the presence of at least one hindered amine light stabiliser;
wherein the polymerization is carried out in the presence of a Ziegler-Natta catalyst.

Viewing from another aspect, the invention provides an article comprising the polypropylene composition as hereinbefore defined.

### Definitions

The term "polypropylene" will be understood to mean a propylene based polymer, i.e. one comprising at least 50 wt.-% propylene, based on the total weight of the polymer as a whole. The term "polypropylene" and "propylene polymer" mean the same thing and may be used interchangeably.

The term "gamma sterilisable" within the context of the invention means that the polymer is capable of sterilisation via the use of gamma radiation. The person skilled in the art will be familiar with gamma sterilisation techniques. Gamma sterilisation is typically carried out at a dose in the range of 15 to 150 kGy.

The term "random copolymer" has to be preferably understood according to IUPAC (Pure Appl. Chem., Vol. No. 68, 8, pp. 1591 to 1595, 1996).

### Detailed Description

The present invention relates to a polypropylene composition comprising a bimodal random propylene copolymer and at least one hindered amine light stabiliser.

### Bimodal Random Propylene Copolymer

The bimodal random Ziegler-Natta propylene copolymer employed in the compositions of the present invention comprises:
(i) 30 to 70 wt.-% of a first propylene copolymer having a comonomer content in the range of 0.1 to 4.5 wt.-% relative to the total weight of the first propylene copolymer, and an MFR₂ of 1 to 100 g/10 min; and
(ii) 70 to 30 wt% of a second propylene copolymer having a comonomer content in the range of 1.0 to 15 wt.-% relative to the total weight of the second propylene copolymer, and an MFR₂ of 1 to 100 g/10 min;
with the proviso that the comonomer content of the second propylene copolymer (ii) is higher than that of the first propylene copolymer (i).

Whilst it is within the ambit of the invention for the bimodal random propylene copolymer to comprise further polymer components, it is preferred if the first and second propylene copolymers (i) and (ii) are the sole polymer components, i.e. the bimodal random propylene copolymer consists of components (i) and (ii) described above.

The bimodal random Ziegler-Natta propylene copolymer is a propylene copolymer comprising propylene and one or more comonomers. Preferably, the one or more comonomers are selected from ethylene and C4-C10 alpha olefins, preferably selected from ethylene and C4-C8 alpha olefins, more preferably selected from ethylene and C4-C6 alpha olefins, even more preferably selected from one or more comonomers comprising ethylene, further even more preferably the comonomer is selected from solely ethylene.

Thus, in a preferable embodiment, the propylene-random copolymer comprises propylene and ethylene as monomer units, preferably consists of propylene and ethylene as monomer units.

The bimodal random Ziegler-Natta propylene copolymer has total comonomer content in the range of 2.0 to 4.5 wt.-%, preferably 3.0 to 4.2 wt.-% relative to the total weight of the copolymer.

The bimodal random Ziegler-Natta propylene copolymer may have a melt flow rate (MFR₂) in the range of from 1.0 to 60 g/10 min, preferably in the range of from 5.0 to 45 g/10 min, more preferably in the range of from 15 to 30 g/10 min. The MFR₂ is determined according to ISO 1133, at a temperature of 230 °C and under a load of 2.16 kg.

The random propylene copolymer is bimodal with respect to molecular weight distribution and/or comonomer content.

### First propylene copolymer (i)

The first propylene copolymer (i) forms 30 - 70 wt.-%, preferably of 35 - 65 wt.-%, more preferably of 45 - 55 wt.-%, relative to the total weight of the bimodal propylene copolymer.

The first propylene copolymer (i) is a propylene copolymer comprising propylene and one or more comonomers. Preferably, the one or more comonomers are selected from ethylene and C4-C10 alpha olefins, preferably selected from ethylene and C4-C8 alpha olefins, more preferably selected from ethylene and C4-C6 alpha olefins, even more preferably selected from one or more comonomers comprising ethylene, further even more preferably the comonomer is selected from solely ethylene.

Thus, in a preferably embodiment, the first propylene copolymer (i) comprises propylene and ethylene as monomer units, preferably consists of propylene and ethylene as monomer units.

The first propylene copolymer (i) has total comonomer content in the range of 0.1 to 4.5 wt.-%, preferably in the range of from 0.4 to 2.5 wt.-%, more preferably in the range of from 0.6 to 1.5 wt.-% relative to the total weight of the first propylene copolymer (i). The comonomer content of the first propylene copolymer (i) is lower than the comonomer content of the second propylene copolymer (ii). Thus, the first propylene copolymer (i) may be viewed as the comonomer lean fraction whereas the second propylene copolymer (ii) may be viewed as the comonomer rich fraction.

The first propylene copolymer (i) may have a melt flow rate (MFR₂) in the range of from 1.0 to 100 g/10 min, preferably in the range of from 15 to 40 g/10 min, more preferably in the range of from 17 to 35 g/10min. The MFR₂ is determined according to ISO 1133, at a temperature of 230 °C and under a load of 2.16 kg.

### Second propylene copolymer (ii)

The second propylene copolymer (ii) forms 70 - 30 wt.-%, preferably of 65 - 35 wt.-%, more preferably of 55 - 45 wt.-%, relative to the total weight of the bimodal propylene copolymer.

The second propylene copolymer (ii) is a propylene copolymer comprising propylene and one or more comonomers. Preferably, the one or more comonomers are selected from ethylene and C4-C10 alpha olefins, preferably selected from ethylene and C4-C8 alpha olefins, more preferably selected from ethylene and C4-C6 alpha olefins, even more preferably selected from one or more comonomers comprising ethylene, further even more preferably the comonomer is selected from solely ethylene.

Thus, in a preferably embodiment, the second propylene copolymer (ii) comprises propylene and ethylene as monomer units, preferably consists of propylene and ethylene as monomer units.

The second propylene copolymer (ii) has total comonomer content in the range of 1.0 to 15 wt.-%, preferably in the range of from 3.0 to 10 wt.-%, more preferably in the range of from 5.0 to 8.0 wt.-% relative to the total weight of the second propylene copolymer (ii). The comonomer content of the first propylene copolymer (i) is lower than the comonomer content of the second propylene copolymer (ii). Thus, the first propylene copolymer (i) may be viewed as the comonomer lean fraction whereas the second propylene copolymer (ii) may be viewed as the comonomer rich fraction.

The second propylene copolymer (ii) may have a melt flow rate (MFR₂) in the range of from 1.0 to 100 g/10 min, preferably in the range of from 15 to 40 g/10 min, more preferably in the range of from 17 to 35 g/10 min. The MFR₂ is determined according to ISO 1133, at a temperature of 230 °C and under a load of 2.16 kg.

### Preparation of Bimodal Random Propylene Copolymer

The bimodal random Ziegler-Natta propylene copolymer used in the polypropylene composition of the invention can be produced by any known polymerisation method and polymerisation technologies.

Preferably, the bimodal random Ziegler-Natta propylene copolymer used in the polypropylene compositions of the present invention is typically prepared in a sequential polymerization process. The term "sequential polymerization process", in the present application, indicates that the propylene polymer fractions are produced in a process comprising at least two reactors connected in series. In one preferred embodiment the term "sequential polymerization process" indicates, in the present application, that the reaction mixture of the first reactor, i.e. the first propylene copolymer (i) with unreacted monomers, is conveyed, preferably directly conveyed; into a second reactor where the second propylene copolymer (ii) is obtained.

Accordingly, the bimodal propylene copolymer is preferably prepared via a process comprising at least a first reactor and a second reactor. The process may comprise at least one additional polymerization reactor subsequent to the second reactor. In one specific embodiment, the process consists of two polymerization reactors i.e. a first reactor and a second reactor. The term "polymerization reactor" shall indicate that the main polymerization takes place. Thus, in case the process consists of two or more polymerization reactors, this definition does not exclude the option that the overall process comprises for instance a pre-polymerization step in a pre-polymerization reactor. The term "consists of" is only a closing formulation in view of the main polymerization reactors. In case the overall process according to the invention comprises a pre-polymerization reactor, the term "first propylene copolymer fraction" means the sum of (co)polymer produced in the pre-polymerization reactor and the (co)polymer produced in the first reactor.

The reactors are generally selected from slurry and gas phase reactors.

The first reactor is preferably a slurry reactor and can be any continuous or simple stirred batch tank reactor or loop reactor operating in bulk polymerization or slurry polymerization. By "bulk polymerization" it is meant a process where the polymerization is conducted in a liquid monomer essentially in the absence of an inert diluent. However, it is known to a person skilled in the art, that the monomers used in commercial production are never pure but always contain aliphatic hydrocarbons as impurities. For instance, the propylene monomer may contain up to 5 % of propane as an impurity. Thus, "bulk polymerization" preferably means a polymerization in a reaction medium that comprises at least 60 % (wt/wt) of the monomer. According to the present invention, the first reactor is more preferably a loop reactor.

The second reactor is preferably a gas-phase reactor. Said gas-phase reactor can be any mechanically mixed or fluidized bed reactor or settled bed reactor. Preferably, the gas-phase reactor comprises a mechanically agitated fluidized bed reactor with gas velocities of at least 0.2 m/sec. The gas-phase reactor of a fluidized bed type reactor can further include a mechanical agitator to facilitate the mixing within the fluidized bed.

The potentially subsequent polymerization reactor or reactors is/are preferably a gas-phase reactor.

A preferred polymerization process is a "loop-gas phase"-process, such as developed by Borealis and known as BORSTAR^{™} technology. Examples of this polymerization process are described in EP0887379, WO92/12182, WO2004/000899, WO2004/111095, WO99/24478, WO99/24479 and WO00/68315.

When the overall process according to the invention comprises a pre-polymerization reactor, said pre-polymerization step takes place prior to the polymerization in the first reactor. The pre-polymerization step takes place in a pre-polymerization reactor wherein pre-(co)polymerization of propylene is conducted. The pre-polymerization reactor is of smaller size compared to the first reactor, the second reactor and the subsequent polymerization reactor or reactors, according to the invention, respectively. The reaction volume of the pre-polymerization reactor can be, for example, between 0.001 % and 10 % of the reaction volume of the first reactor, like the loop reactor. In said pre-polymerization reactor, the pre-(co)polymerization of propylene is performed in bulk or slurry, producing a propylene (co)polymer.

The operating temperature in the pre-polymerization reactor is typically in the range of 0 to 60 °C, preferably in the range of 15 to 50 °C, more preferably in the range of 18 to 35 °C.

The pressure in the pre-polymerization reactor is not critical but must be sufficiently high to maintain the reaction mixture in liquid phase. Thus, the pressure in the pre-polymerization reactor may be in the range of 20 to 100 bar, preferably in the range of 30 to 70 bar.

Hydrogen can be added in the pre-polymerization reactor in order to control the molecular weight, and thus the melt flow rate MFR₂ of the propylene (co)polymer produced in the pre-polymerization reactor.

In the first reactor of the process according to the invention, a monomer feed comprised of propylene and one or more comonomers, preferably selected from ethylene and C₄-C₁₀ alpha-olefins, is fed. In case the pre-polymerization step is present in the process, the propylene (co)polymer produced in the pre-polymerization reactor, is also fed into the first reactor. In the first reactor, a first propylene polymer fraction is obtained. It will be understood that the "first propylene polymer fraction" is equivalent to the first propylene copolymer (i) of the present invention.

The first propylene polymer fraction generally has a comonomer content, preferably selected from ethylene and C₄-C₁₀ alpha-olefins, in the range of from 0.1 to 4.5 wt.-%, preferably in the range of from 0.4 to 2.5 wt.-%, more preferably in the range of from 0.6 to 1.0 wt.-%, relative to the total weight of the first propylene polymer fraction.

Generally, the first propylene polymer fraction has a melt flow rate (MFR₂) in the range of from 1.0 to 100 g/10min, preferably in the range of from 15 to 40 g/10min, more preferably in the range of from 17 to 35 g/10min. The MFR₂ is determined according to ISO 1133, at a temperature of 230 °C and under a load of 2.16 kg.

The operating temperature in the first reactor is generally in the range of 62 to 85 °C, preferably in the range of 65 to 82 °C, more preferably in the range of 67 to 80 °C.

Typically, the pressure in the first reactor is in the range of 20 to 80 bar, preferably in the range of 30 to 70 bar, more preferably in the range of 35 to 65 bar.

Hydrogen can be added in the first reactor in order to control the molecular weight, and thus the melt flow rate MFR₂ of the first propylene polymer fraction obtained in said first reactor.

Generally, the hydrogen/propylene (H₂/C₃) ratio in the first reactor is in the range of 1.5 to 6.0 mol/kmol, preferably in the range of from 1.6 to 5.5 mol/kmol, more preferably in the range of from 1.7 to 5.0 mol/kmol.

Generally, the ratio of one or more comonomers (preferably selected from ethylene and C₄-C₁₀ alpha-olefins) to C₃ in the first reactor is below 10.0 mol/kmol, preferably in the range of from 0.0 to 8.0 mol/kmol, more preferably in the range of from 0.0 to 7.5 mol/kmol.

Generally, the reaction mixture of the first reactor is conveyed, preferably directly conveyed; into the second reactor. By "directly conveyed" is meant a process wherein the reaction mixture of the first reactor is led directly to the next polymerization step, i.e. the second reactor. Monomers comprising propylene and one or more comonomers, preferably selected from ethylene and C₄-C₁₀ alpha-olefins, are fed into the second reactor. In the second reactor, a second propylene polymer fraction is obtained. It will be understood that the "second propylene polymer fraction" is equivalent to the "second propylene copolymer (ii)" of the invention. This second propylene polymer fraction is thus produced in the presence of the first propylene polymer fraction, resulting in the *in situ* production of the bimodal random copolymer of the invention.

Those skilled in the art will appreciate that the material, which exits the second reactor, comprises both the first and second propylene polymer fractions. This mixture is the bimodal random copolymer of the invention. Any measurements carried out directly on the material exiting the second reactor will thus reflect the properties of the bimodal random copolymer of the invention and not the second propylene polymer fraction. From these measurements, together with the measurements on the material exiting the first reactor (i.e. the first propylene polymer fraction), the properties of the second propylene polymer fraction may be calculated based on known methods.

The second propylene polymer fraction generally has a comonomer content, preferably selected from ethylene and C₄-C₁₀ alpha-olefins, in the range of from 1.0 to 15 wt.-%, preferably in the range of from 3.0 to 10 wt.-%, more preferably in the range of from 5.0 to 8.0 wt.-%, relative to the total weight of the second propylene polymer fraction.

Generally, the second propylene polymer fraction has a melt flow rate (MFR₂) in the range of from 1 to 100 g/10 min, preferably in the range of from 15 to 40 g/10 min, more preferably in the range of from 17 to 35 g/10 min. The MFR₂ is determined according to ISO 1133, at a temperature of 230 °C and under a load of 2.16 kg.

The operating temperature in the second reactor is generally in the range of 70 to 95 °C, preferably in the range of 75 to 90 °C, more preferably in the range of 78 to 88 °C.

Typically the pressure in the second reactor is in the range of 5 to 50 bar, preferably in the range of 15 to 40 bar.

Hydrogen can be added in the second reactor in order to control the molecular weight, and thus the melt flow rate MFR₂ of the second propylene polymer fraction obtained in said second reactor.

Generally, the hydrogen/propylene (H₂/C₃) ratio in the second reactor is in the range of 12.0 to 70.0 mol/kmol, preferably in the range of 15.0 to 60.0 mol/kmol, more preferably in the range of 16.0 to 50.0 mol/kmol.

Generally, the ratio of one or more comonomers (preferably selected from ethylene and C₄-C₁₀ alpha-olefins) to C₃ in the second reactor is in the range of 4.5 to 20.0 mol/kmol, preferably in the range of 5.0 to 18.0 mol/kmol, more preferably in the range of 5.5 to 17.0 mol/kmol.

In the process according to the invention, the propylene polymer produced in the first reactor i.e. the first propylene copolymer (i) is generally produced in an amount in the range of from 30 to 70 wt.-%, preferably in an amount in the range of from 40 to 60 wt.-%, more preferably in an amount in the range of from 45 to 55 wt.-%, relative to the total weight of the bimodal propylene copolymer.

In the process according to the invention, the propylene polymer produced in the second reactor i.e. the second propylene copolymer (ii) is generally produced in an amount in the range of from 30 to 70 wt.-%, preferably in an amount in the range of from 40 to 60 wt.-%, more preferably in an amount in the range of from 45 to 55 wt.-%, relative to the total weight of the bimodal propylene copolymer.

The comonomer content of the second propylene copolymer (ii) is higher than that of the first propylene copolymer (i).

The one or more comonomers, preferably selected from ethylene and C₄-C₁₀ alpha-olefins, are incorporated into the reactors of the inventive process in different amounts resulting in a propylene copolymer having bimodal comonomer distribution with respect to the comonomer content of each of the propylene polymers comprised therein i.e. the first propylene copolymer (i) and the second propylene copolymer (ii).

In the process according to the invention, the one or more comonomers are preferably selected from ethylene and C₄-C₁₀ alpha-olefins, more preferably selected from ethylene and C₄-C₈ alpha-olefins, even more preferably selected from ethylene and C₄-C₆ alpha-olefins, even more preferably selected from one or more comonomers comprising ethylene, further even more preferably the comonomer is selected from solely ethylene, through the present invention.

After the polymerization in the second reactor step, the first and second propylene polymer fractions (which are together the bimodal random copolymer of the invention) are recovered by conventional procedures know by the person skilled in the art.

The recovered bimodal random copolymer is generally in the form of particles.

Typically, the bimodal random copolymer recovered from the polymerization process is then extruded in the presence of at least one hindered amine light stabiliser, together with any other optional components, in order to produce the inventive polypropylene composition.

The extruder, where the extrusion step is carried out, may be any extruder known in the art. The extruder may thus be a single screw extruder; a twin screw extruder, such as a co-rotating twin screw extruder or a counter-rotating twin screw extruder; or a multi-screw extruder, such as a ring extruder. Preferably, the extruder is a single screw extruder or a twin screw extruder. Especially preferred extruder is a co-rotating twin screw extruder.

The extruder typically comprises a feed zone, a melting zone, a mixing zone and optionally a die zone.

The extruder typically has a length over diameter ratio, L/D, of up to 60:1, preferably of up to 40:1.

The extruder may also have one or more feed ports for introducing further components, such as for example additives, into the extruder. The location of such additional feed ports depends on the type of material added through the port.

A polymerization catalyst is present in the process according to the invention. The polymerization catalyst is a Ziegler-Natta catalyst. Propylene polymerized in the presence of a Zeigler-Natta catalyst is referred to as "Ziegler-Natta propylene". Generally, the polymerization Ziegler-Natta catalyst comprises one or more compounds of a transition metal (TM) of Group 4 to 6 as defined in IUPAC version 2013, like titanium, further a Group 2 metal compound, like a magnesium compound and an internal donor (ID).

The components of the catalyst may be supported on a particulate support, such as for example an inorganic oxide, like for example silica or alumina. Alternatively, a magnesium halide may form the solid support. It is also possible that the catalyst components are not supported on an external support, but the catalyst is prepared by an emulsion-solidification method or by a precipitation method, as is well-known by the person skilled in the art of catalyst preparation.

Preferably, a specific type of Ziegler-Natta catalyst is present in the process according to the invention. In this specific type of Ziegler-Natta catalyst, it is essential that the internal donor is a non-phthalic compound. Preferably, through the whole specific type of Ziegler-Natta catalyst preparation no phthalate compound is used, thus the final specific type of Ziegler-Natta catalyst does not contain any phthalic compound. Thus, the specific type of Ziegler-Natta catalyst is free of phthalic compound. Therefore, the bimodal random copolymer according to the invention is free of phthalic compound.

Generally, the specific type of Ziegler-Natta catalyst comprises an internal donor (ID) which is chosen to be a non-phthalic compound, in this way the specific type of Ziegler-Natta catalyst is completely free of phthalic compound. Further, the specific type of Ziegler-Natta catalyst can be a solid catalyst preferably being free of any external support material, like silica or MgCl₂, and thus the solid catalyst is self-supported.

The solid catalyst is typically obtainable by the following general procedure:
a) providing a solution of
   a₁) at least a Group 2 metal alkoxy compound (Ax) being the reaction product of a Group 2 metal compound and an alcohol (A) comprising in addition to the hydroxyl moiety at least one ether moiety, optionally in an organic liquid reaction medium; or
   a₂) at least a Group 2 metal alkoxy compound (Ax') being the reaction product of a Group 2 metal compound and an alcohol mixture of the alcohol (A) and a monohydric alcohol (B) of formula ROH, optionally in an organic liquid reaction medium; or
   a₃) a mixture of the Group 2 metal alkoxy compound (Ax) and a Group 2 metal alkoxy compound (Bx) being the reaction product of a Group 2 metal compound and the monohydric alcohol (B), optionally in an organic liquid reaction medium; or
   a₄) Group 2 metal alkoxy compound of formula M(OR₁)ₙ(OR₂)ₘX₂₋ₙ₋ₘ or mixture of Group 2 alkoxides M(OR₁)_{n'}X_{2-n'} and M(OR₂)_{m'}X_{2-m'}, where M is a Group 2 metal, X is halogen, R₁ and R₂ are different alkyl groups of 2 to 16 carbon atoms, and 0≤n<2, 0≤m<2 and n+m+(2-n-m) = 2, provided that n and m are not 0 simultaneously, 0<n'≤2 and 0<m'≤2; and
b) adding said solution from step a) to at least one compound of a transition metal of Group 4 to 6 and
c) obtaining the solid catalyst component particles,
   and adding a non-phthalic internal electron donor (ID) at least in one step prior to step c).

The internal donor (ID) or precursor thereof is preferably added to the solution of step a) or to the transition metal compound before adding the solution of step a).

According to the procedure above, the solid catalyst can be obtained via a precipitation method or via an emulsion - solidification method depending on the physical conditions, especially the temperature used in steps b) and c). An emulsion is also called liquid-liquid two-phase system. In both methods (precipitation or emulsion-solidification) the catalyst chemistry is the same.

In the precipitation method, combination of the solution of step a) with at least one transition metal compound in step b) is carried out and the whole reaction mixture is kept at least at 50 °C, more preferably in a temperature range of 55 to 110 °C, more preferably in a range of 70 to 100 °C, to secure full precipitation of the catalyst component in the form of solid catalyst component particles (step c).

In the emulsion-solidification method, in step b) the solution of step a) is typically added to the at least one transition metal compound at a lower temperature, such as from -10 to below 50 °C, preferably from -5 to 30 °C. During agitation of the emulsion the temperature is typically kept at -10 to below 40 °C, preferably from -5 to 30 °C. Droplets of the dispersed phase of the emulsion form the active catalyst composition. Solidification (step c) of the droplets is suitably carried out by heating the emulsion to a temperature of 70 to 150 °C, preferably to 80 to 110 °C. The catalyst prepared by the emulsion-solidification method is preferably used in the present invention.

In step a) preferably the solution of a₂) or a₃) is used, i.e. a solution of (Ax') or a solution of a mixture of (Ax) and (Bx).

Preferably, the Group 2 metal is magnesium. The magnesium alkoxy compounds (Ax), (Ax'), (Bx) can be prepared *in situ* in the first step of the catalyst preparation process, step a), by reacting the magnesium compound with the alcohol(s) as described above. Another option is to prepare said magnesium alkoxy compounds separately or they can be even commercially available as already prepared magnesium alkoxy compounds and used as such in the catalyst preparation process of the invention.

Illustrative examples of alcohols (A) are glycol monoethers. Preferred alcohols (A) are C₂ to C₄ glycol monoethers, wherein the ether moieties comprise from 2 to 18 carbon atoms, preferably from 4 to 12 carbon atoms. Preferred examples are 2-(2-ethylhexyloxy) ethanol, 2-butyloxy ethanol, 2-hexyloxy ethanol and 1,3-propylene-glycol-monobutyl ether, 3-butoxy-2-propanol, with 2-(2-ethylhexyloxy) ethanol and 1,3-propylene-glycol-monobutyl ether, 3-butoxy-2-propanol being particularly preferred.

The illustrative monohydric alcohol (B) is represented by the structural formula ROH with R being a straight-chain or branched C₂-C₁₆ alkyl residue, preferably a C₄ to C₁₀ alkyl residue, more preferably a C₆ to C₈ alkyl residue. The most preferred monohydric alcohol is 2-ethyl-1-hexanol or octanol.

Preferably, a mixture of Mg alkoxy compounds (Ax) and (Bx) or a mixture of alcohols (A) and (B), respectively, are used and employed in a mole ratio of Bx:Ax or B:A from 10:1 to 1:10, more preferably 6:1 to 1:6, still more preferably 5:1 to 1:3, most preferably 5:1 to 3:1.

The magnesium alkoxy compound may be a reaction product of alcohol(s), as defined above and a magnesium compound selected from dialkyl magnesium, alkyl magnesium alkoxide, magnesium dialkoxide, alkoxy magnesium halide and alkyl magnesium halide. Further, magnesium dialkoxide, magnesium diaryloxide, magnesium aryloxyhalide, magnesium aryloxide and magnesium alkyl aryloxide can be used. Alkyl groups in the magnesium compound can be similar or different C₁-C₂₀ alkyl groups, preferably C₂-C₁₀ alkyl groups. Typical alkyl-alkoxy magnesium compounds, when used, are ethyl magnesium butoxide, butyl magnesium pentoxide, octyl magnesium butoxide and octyl magnesium octoxide. Preferably, the dialkyl magnesiums are used. Most preferred, dialkyl magnesiums are butyl octyl magnesium or butyl ethyl magnesium.

It is also possible that the magnesium compound reacts in addition to the alcohol (A) and alcohol (B) with a polyhydric alcohol (C) of formula R"(OH)ₘ to obtain said magnesium alkoxide compound. Preferred polyhydric alcohols, if used, are alcohols, wherein R" is a straight-chain, cyclic or branched C₂ to C₁₀ hydrocarbon residue and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides or a mixture of magnesium dihalide and a magnesium dialkoxide.

The solvent to be employed for the preparation of the present catalyst may be selected from among aromatic and aliphatic straight-chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particularly preferred.

The reaction for the preparation of the magnesium alkoxy compound may be carried out at a temperature of 40 to 70 °C. The person skilled in the art knows how to select the most suitable temperature depending on the Mg compound and alcohol(s) used.

The transition metal (TM) compound of Group 4 to 6 as defined in IUPAC version 2013 is preferably a titanium compound, most preferably a titanium halide, like TiCl₄.

The non-phthalic internal donor (ID) used in the preparation of the specific type of Ziegler-Natta catalyst used in the present invention is preferably selected from (di)esters of non-phthalic carboxylic (di)acids, 1,3-diethers, derivatives and mixtures thereof. An especially preferred donor is a diester of mono-unsaturated non-phthalic dicarboxylic acids, in particular an ester belonging to a group comprising malonates, maleates, succinates, citraconates, glutarates, cyclohexene-1,2-dicarboxylates and benzoates and derivatives thereof and/or mixtures thereof. Preferred examples are e.g. substituted maleates and citraconates, most preferably citraconates.

Here and hereinafter the term derivative includes substituted compounds.

In the emulsion-solidification method, the two phase liquid-liquid system may be formed by simple stirring and optionally adding (further) solvent(s) and/or additives, such as a turbulence minimizing agent (TMA) and/or an emulsifying agent and/or an emulsion stabilizer, like a surfactant, which are used in a manner known in the art. These solvents and/or additives are used to facilitate the formation of the emulsion and/or stabilize it. Preferably, surfactants are acrylic or methacrylic polymers. Particularly preferred are unbranched C₁₂ to C₂₀ (meth)acrylates such as for example poly(hexadecyl)-methacrylate and poly(octadecyl)-methacrylate and mixtures thereof. The turbulence minimizing agent (TMA), if used, is preferably selected from polymers of α-olefin monomers with 6 to 20 carbon atoms, like polyoctene, polynonene, polydecene, polyundecene or polydodecene or mixtures thereof. Most preferable it is polydecene.

The solid particulate product obtained by the precipitation or emulsion - solidification method may be washed at least once, preferably at least twice, most preferably at least three times. The washing can take place with an aromatic and/or aliphatic hydrocarbon, preferably with toluene, heptane or pentane. Washing is also possible with TiCl₄ optionally combined with the aromatic and/or aliphatic hydrocarbon. Washing liquids can also contain donors and/or compounds of Group 13, like trialkyl aluminium, halogenated alky aluminium compounds or alkoxy aluminium compounds. Aluminium compounds can also be added during the catalyst synthesis. The catalyst can further be dried, for example by evaporation or flushing with nitrogen or it can be slurried to an oily liquid without any drying step.

The finally obtained specific type of Ziegler-Natta catalyst is desirably obtained in the form of particles having generally an average particle size range of 5 to 200 µm, preferably 10 to 100 µm. The particles are generally compact with low porosity and have generally a surface area below 20 g/m², more preferably below 10 g/m². Typically, the amount of Ti present in the catalyst is in the range of 1 to 6 wt.-%, the amount of Mg is in the range of 10 to 20 wt.-% and the amount of internal donor present in the catalyst is in the range of 10 to 40 wt.-% of the catalyst composition. A detailed description of the preparation of the catalysts used in the present invention is disclosed in, for example, WO 2012/007430, EP 2610271 and EP 2610272.

An external donor (ED) is preferably present as a further component in the polymerization process according to the invention. Suitable external donors (ED) include certain silanes, ethers, esters, amines, ketones, heterocyclic compounds and blends of these. It is especially preferred to use a silane. It is most preferred to use silanes of the general formula (I)

R^{a}ₚR^{b}_{q}Si(OR^{c})_{(4-p-q)} (I)

wherein R^{a}, R^{b} and R^{c} denote a hydrocarbon radical, in particular an alkyl or cycloalkyl group, and wherein p and q are numbers ranging from 0 to 3 with their sum (p+q) being equal to or less than 3. R^{a}, R^{b} and R^{c} can be chosen independently from one another and can be the same or different. Specific examples of silanes according to formula (I) are (tert-butyl)₂Si(OCH₃)₂, (cyclohexyl)(methyl)Si(OCH₃)₂, (phenyl)₂Si(OCH₃)₂ and (cyclopentyl)₂Si(OCH₃)₂. Another most preferred silane is according to the general formula (II)

Si(OCH₂CH₃)₃(NR³R⁴) (II)

wherein R³ and R⁴ can be the same or different and represent a linear, branched or cyclic hydrocarbon group having 1 to 12 carbon atoms. It is in particular preferred that R³ and R⁴ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. Most preferably ethyl is used.

Generally, in addition to the Ziegler-Natta catalyst or the specific type of Ziegler-Natta catalyst and the optional external donor (ED) a co-catalyst (Co) can be present in the polymerization process according to the invention. The co-catalyst is preferably a compound of group 13 of the periodic table (IUPAC, version 2013), such as for example an aluminum compound, e.g., an organo aluminum or aluminum halide compound. An example of a suitable organo aluminium compound is an aluminum alkyl or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Generally, the molar ratio between the co-catalyst (Co) and the external donor (ED) [Co/ED] and/or the molar ratio between the co-catalyst (Co) and the transition metal (TM) [Co/TM] is carefully chosen for each process. The molar ratio between the co-catalyst (Co) and the external donor (ED), [Co/ED] can suitably be in the range of 2.5 to 50.0 mol/mol, preferably in the range of 4.0 to 35.0 mol/mol, more preferably in the range of 5.0 to 30.0 mol/mol. A suitable lower limit can be 2.5 mol/mol, preferably 4.0 mol/mol, more preferably 5.0 mol/mol. A suitable upper limit can be 50.0 mol/mol, preferably 35.0 mol/mol, more preferably 30.0 mol/mol. The lower and upper indicated values of the ranges are included.

The molar ratio between the co-catalyst (Co) and the transition metal (TM), [Co/TM] can suitably be in the range of 20.0 to 500.0 mol/mol, preferably in the range of 50.0 to 400.0 mol/mol, more preferably in the range of 100.0 to 300.0 mol/mol. A suitable lower limit can be 20.0 mol/mol, preferably 50.0 mol/mol, more preferably 100.0 mol/mol. A suitable upper limit can be 500.0 mol/mol, preferably 400.0 mol/mol, more preferably 300.0 mol/mol. The lower and upper indicated values of the ranges are included.

### Hindered Amine Light Stabiliser

The polypropylene composition of the invention comprises at least one hindered amine light stabiliser. Those skilled in the art will understand hindered amine light stabilizers (HALS) to be well known additives in polymer chemistry. Hindered amine light stabilizers (HALS) are chemical compounds containing an amine functional group that are used as stabilizers, details are published elsewhere, e.g. Zweifel, Hans; Maier, Ralph D.; Schiller, Michael (2009). Plastics additives handbook (6th ed.). Munich: Hanser. These compounds are typically 2,2,6,6-tetramethyl-piperidine derivatives containing at least one group of formula (I): 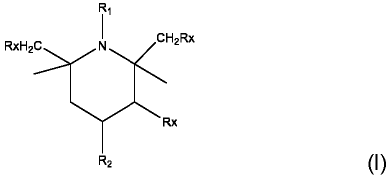 wherein R₁ and R₂ are optionally substituted organic substituents, which may be independently selected from the group consisting of hydrogen, hydroxyl, linear or branched alkyl groups, linear or branched alkenyl groups, aryl groups, linear or branched amine groups, linear or branched carboxylic acid groups, linear or branched ester groups and linear or branched ether groups; and
Rx is hydrogen or methyl.

Example structures of suitable hindered amine light stabilisers include: 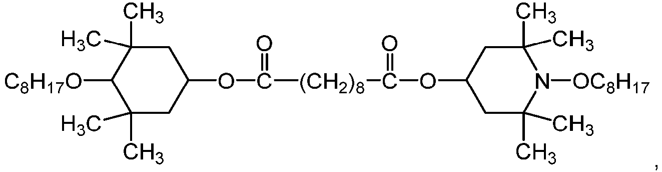 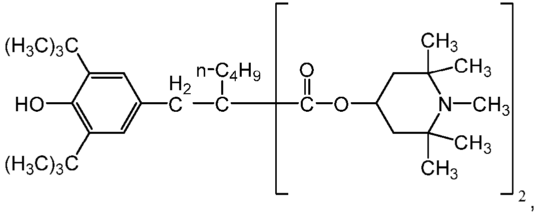 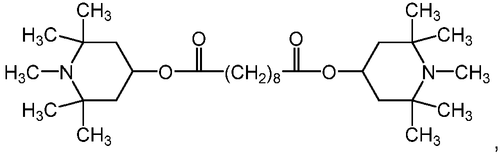 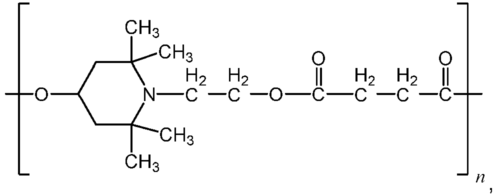 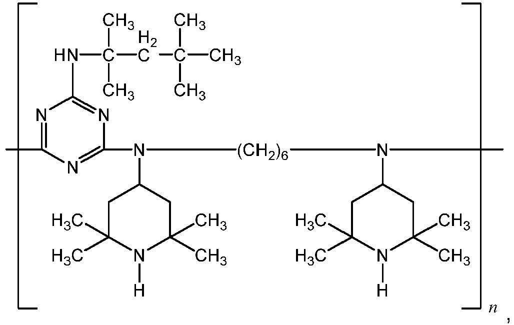 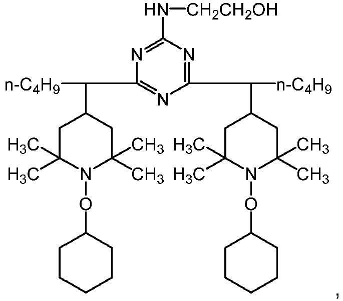 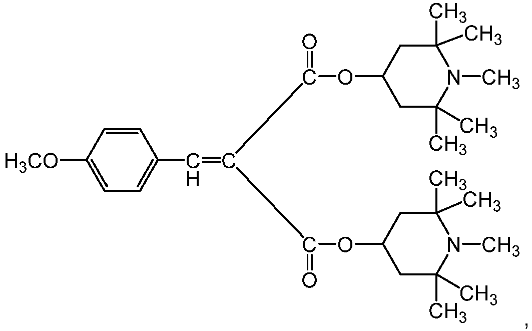 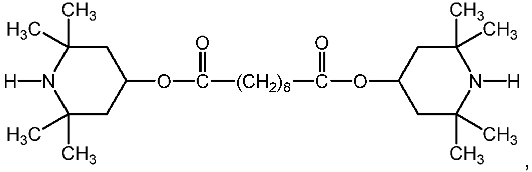 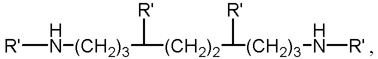 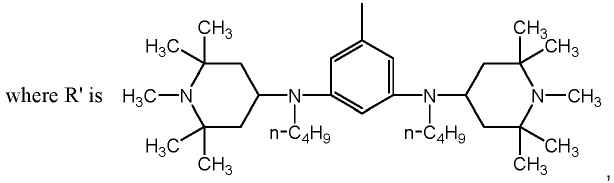 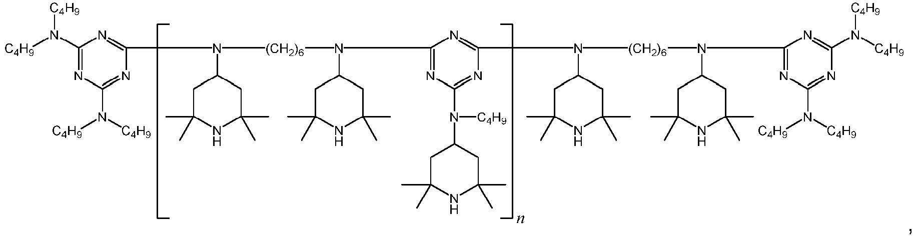 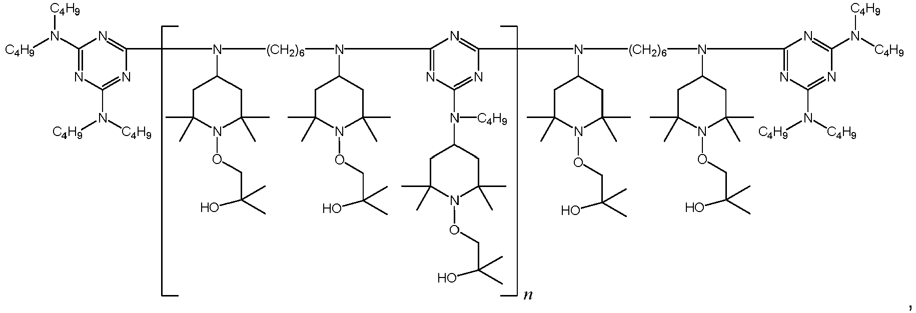 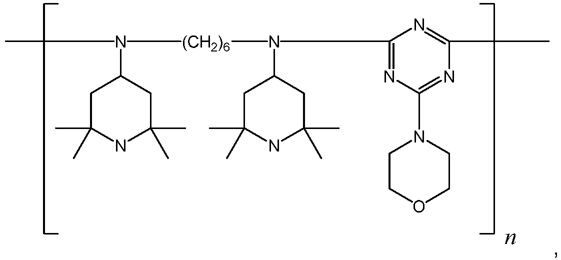 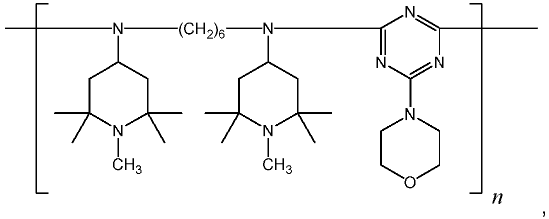 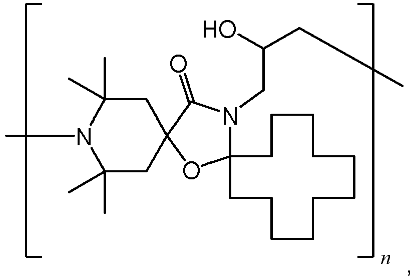 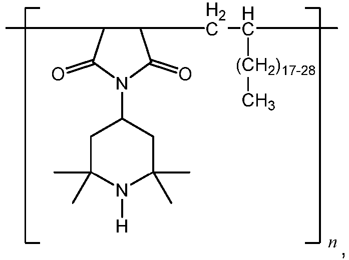 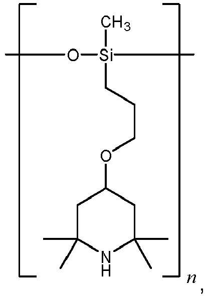 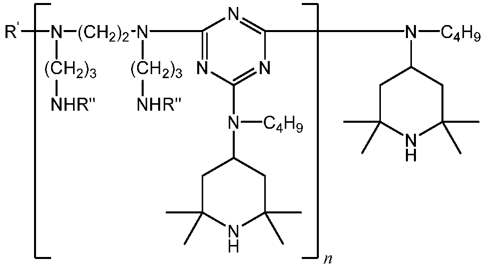 where R' = R" or H, and where R" = 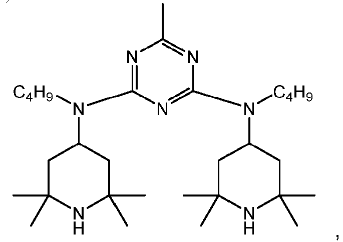 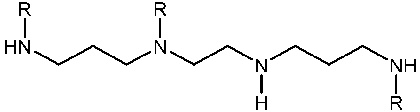 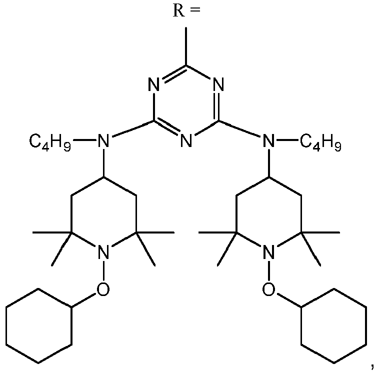 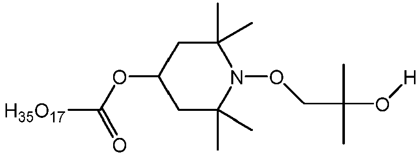 and

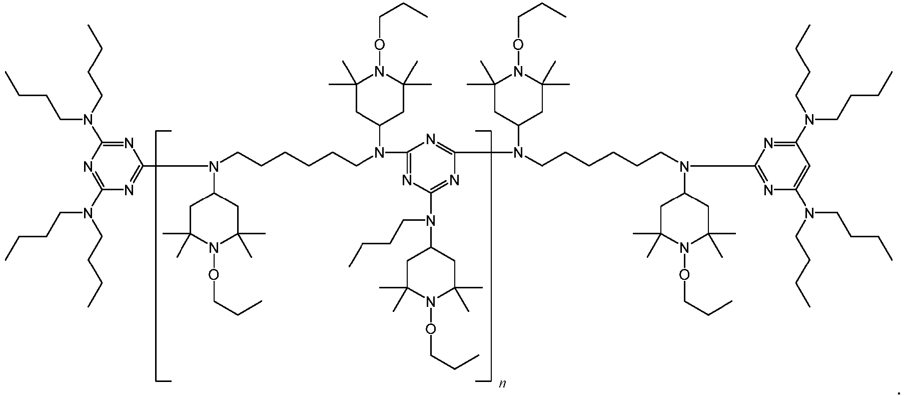

Normally, hindered amine light stabilisers are classified based on their molecular weight, namely, high molecular weight hindered amine light stabiliser when Mw > 2000 g/mol and low molecular weight hindered amine light stabiliser if Mw is below 1000. Preferably, the at least one hindered amine light stabiliser used in the compositions of the invention is high molecular weight.

The hindered amine light stabilisers suitable for the present invention are listed in literature, e.g. page 123 - 136 in Zweifel, Hans; Maier, Ralph D.; Schiller, Michael (2009). Plastics additives handbook (6th ed.). Munich: Hanser. Among them, the most suitable high molecular weight hindered amine light stabilisers are Tinuvin 622 (Dimethyl succinate polymer with 4-hydroxy-2,2,6,6-tetramethyl-1-piperidine ethanol, CAS 65447-77-0) and Chimassorb 944 (Poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino), CAS 71878-19-8) and low molecular weight hindered amine light stabilisers are ADK STAB LA-82 (CAS 68548-08-3) and ADK STAB LA-87 (2,2,6,6-Tetramethyl-4-piperidyl methacrylate, CAS 31582-45-3) with the structure shown below:

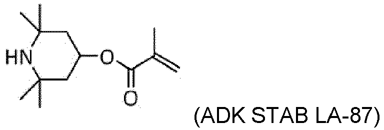

In one embodiment, the at least one hindered amine light stabilizer is preferably a compound of general formula (II) shown below: 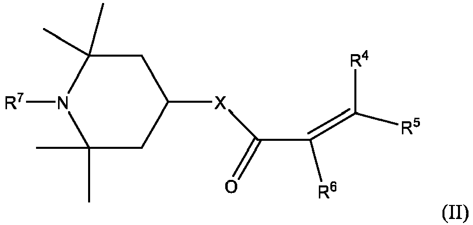 wherein
X is O, NH, or NR³, wherein R³ is C1-C8 alkyl;
R⁴, R⁵ and R⁶ are independently selected from the group consisting of H, C₁-C₈ alkyl, C₁-C₈ alkenyl and optionally substituted C₆-C₁₂ aryl; and
R⁷ is H, C₁-C₈ alkyl, C₆-C₁₂ cycloalkyl, C₁-C₁₀ acyl, C₁-C₁₀ acyloxy or C₁-C₈ alkyl ether; wherein the optional substituent(s) on the C₆-C₁₂ aryl group are C₁-C₈ hydrocarbon groups, such as C₁-C₈ alkyl or C₁-C₈ alkenyl.

Preferably, in formula (II), X=O, R⁴ and R⁵ are H, R⁶ is H or methyl and R⁷ is H, C₁-C₈ alkyl, such as methyl or C₁-C₉ acyl, such as acetyl or acetoxyl.

ADK STAB LA-87 (structure shown above) is a particularly preferred example of a hindered amine light stabilizer of general formula (II).

The compositions of the invention may comprise a single hindered amine light stabiliser, or a mixture of two or more hindered amine light stabilisers.

In one preferred embodiment, the compositions of the invention comprise a single hindered amine light stabilizer which is a high molecular weight hindered amine light stabilizer as defined above, for example Tinuvin 622 (CAS 65447-77-0).

In another preferred embodiment, the compositions of the invention comprise a mixture of two hindered amine light stabilisers, especially wherein at least one comprises at least one group of formula (I) as defined above or wherein at least one of the hindered amine light stabilisers is a compound of general formula (II) as defined above.

When the compositions of the invention comprise a mixture of two hindered amine light stabilisers, it is particularly preferred if at least one is a high molecular weight hindered amine light stabilizer as defined above, even more preferred wherein one is a high molecular weight hindered amine light stabilizer as defined above and the other is a compound of general formula (II) as defined above.

The at least one hindered amine light stabilizer is generally present in an amount of 0.05 to 0.5 wt.-%, preferably 0.1 to 0.45 wt.-%, more preferably 0.15 to 0.4 wt.-%, relative to the total weight of the polypropylene composition. It will be understood that, where more than one hindered amine light stabilizer is present, these wt.-% ranges apply to the total amount of all hindered amine light stabilisers.

### Polypropylene Composition

Whilst it is within the ambit of the invention for the polypropylene composition to comprise further polymers in addition to the bimodal random Ziegler-Natta propylene copolymer, it is preferred if the bimodal random Ziegler-Natta propylene copolymer is the sole polymer component in the polypropylene composition. It will be appreciated that the polymer composition may further contain standard polymer additives (which may be part of a masterbatch).

In addition to the bimodal random copolymer and at least one hindered amine light stabiliser, the polypropylene composition of the invention may comprise further additives.

Examples of additives include, but are not limited to, stabilizers such as antioxidants (for example sterically hindered phenols, phosphites/phosphonites, alkyl radical scavengers, aromatic amines, or blends thereof), metal deactivators (for example Irganox ^{®} MD 1024), or UV stabilizers. Other typical additives are modifiers such as antistatic or antifogging agents (for example ethoxylated amines and amides or glycerol esters), acid scavengers (for example Ca-stearate), blowing agents, cling agents (for example polyisobutene), lubricants and resins (for example ionomer waxes, polyethylene- and ethylene copolymer waxes, Fischer Tropsch waxes, montan-based waxes, fluoro-based compounds, or paraffin waxes), as well as slip and antiblocking agents (for example erucamide, oleamide, talc, natural silica and synthetic silica or zeolites) and mixtures thereof.

Generally, the total amount of additives is in the range of 0.1 to 5.0 wt.-%, preferably in the range of 0.1 to 2.0 wt.-%, more preferably in the range of 0.1 to 1.5 wt.-%. The amount of additives is relative to the total amount of polypropylene composition.

In a particularly preferred embodiment, the polypropylene composition of the invention further comprises at least one alpha-nucleating agent. The alpha-nucleating agent may be present in the range of from 0.01 to 1.0 wt.-%, preferably in the range of from 0.03 to 0.9 wt.-%, more preferably in the range of from 0.05 to 0.8 wt.-%. The amount of the at least one alpha-nucleating agent is relative to the total amount of polypropylene composition according to the invention.

The α-nucleating agent is generally selected from the group consisting of:
(i) salts of monocarboxylic acids and polycarboxylic acids, e.g. sodium benzoate or aluminum tert-butylbenzoate,
(ii) dibenzylidenesorbitol (e.g. 1,3 : 2,4 dibenzylidenesorbitol) and C₁-C₈-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol,
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate],
(iv) vinylcycloalkane polymer and vinylalkane polymer, and
(v) mixtures thereof.

Preferably, the α-nucleating agent is a dibenzylidenesorbitol (e.g. 1,3 : 2,4 dibenzylidenesorbitol) or a C₁-C₈-alkyl-substituted dibenzylidenesorbitol derivative, such as methyldibenzylidenesorbitol, ethyldibenzylidenesorbitol or dimethyldibenzylidenesorbitol (e.g. 1,3 : 2,4 di(methylbenzylidene) sorbitol) or a substituted nonitol-derivative, such as 1,2,3,-trideoxy-4,6:5,7-bis-O-[(4-propylphenyl) methylene]-nonitol.

Typically, the α-nucleating agent is present in the polypropylene composition in an amount of 50 to 6000 ppm, preferably 100 to 5000 ppm, more preferably 200 to 4000 ppm, such as 1200 to 3000 ppm.

As discussed above, the polypropylene composition of the invention is typically prepared by extruding the bimodal random copolymer in the presence of the at least one hindered amine light stabiliser, together with any other optional components.

At the end of the extruder, a polypropylene composition melt is obtained. The inventive polypropylene composition melt might then be passed through a die in the optional die zone of the extruder. When the inventive polypropylene composition melt is passed through the die it is generally further cooled down and pelletized.

The die zone typically comprises a die plate, which is generally a thick metal disk having multiple holes. The holes are parallel to the screw axis.

The pelletizer is generally a strand pelletizer or an underwater pelletizer.

Generally, the polypropylene composition of the invention has a haze value < 20%, preferably of from 2% to 18%, more preferably of from 3% to 17%. The haze value is measured according to ASTM D1003 on injection moulded plaques having 1 mm thickness produced as described in EN ISO 1873-2.

Generally, the polypropylene composition of the invention has a melting temperature >150 °C, such as 150 to 165 °C, preferably in the range of from 150 to 162 °C. The melting temperature (Tm) is measured by DSC according to ISO 11357/3.

Generally, the polypropylene composition of the invention has a crystallization temperature > 115 °C, preferably in the range of from 120 to 132 °C, more preferably in the range of 123 to 130 °C. The melting temperature (Tc) is measured by DSC according to ISO 11357/3.

Generally, the polypropylene composition of the invention has a xylene soluble content (XCS) in the range of 5.5 to 18.0 wt.-%, preferably in the range of from 6.0 to 16.0 wt.-%, more preferably in the range of from 6.5 to 15.0 wt.-%. The xylene soluble fraction is determined according to ISO 16152 at 25°C.

Generally, the polypropylene composition of the invention has a flexural modulus >900 MPa, preferably in the range of from 950 to 1600 MPa, more preferably in the range of from 1000 to 1600 MPa. The flexural modulus is measured according to ISO 178 at 23 °C/24h on injection moulded test specimens.

Generally, the polypropylene composition of the invention has a Charpy notched impact strength of more than 4.80 kJ/m², preferably in the range of from 4.85 to 20.00 kJ/m². The Charpy notched impact strength is measured according to ISO 179/1eA at 23° C on injection moulded test specimens as described in EN ISO 1873-2.

### Applications

The present invention also provides an article comprising the polypropylene composition of the invention. Suitable articles are films, like for example cast films, and injection moulded articles. A preferred article is a closure cap, a screw cap or a closure system for food or fluid packaging.

The invention will now be described with reference to the following non-limiting examples.

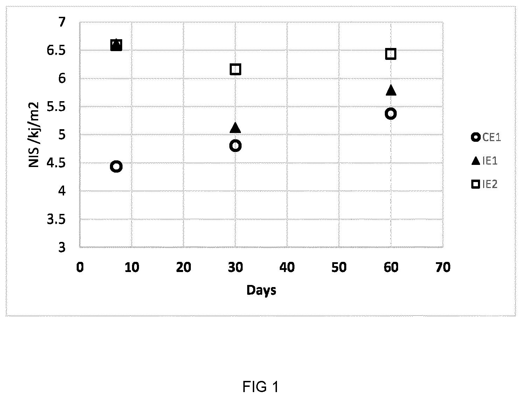

Figure 1: Notched Impact Strength measurements for CE1, IE1 and IE2 after gamma sterilisation

### EXAMPLES

### I. Measuring methods

### a) Melt Flow Rate

The melt flow rate (MFR) is determined according to ISO 1133 and is indicated in g/10min. The MFR is an indication of the flowability and hence the processability of the polymer. The higher the melt flow rate, the lower the viscosity of the polymer. The MFR₂ of polypropylene is determined at a temperature of 230 °C and under a load of 2.16 kg.

### b) DSC analysis

The melting temperature and the crystallisation temperature are measured with a TA Instrument Q2000 differential scanning calorimetry device (DSC) according to ISO 11357/3 on 5 to 10 mg samples, under 50mL/min of nitrogen atmosphere. Crystallisation and melting temperatures were obtained in a heat/cool/heat cycle with a scan rate of 10 °C/min between 30 °C and 225 °C. Crystallisation and melting temperatures were taken as the peaks of the endotherms and exotherms in the cooling step and the second heating step respectively.

### c) Xylene soluble content (XCS, wt%)

The content of the polymer soluble in xylene is determined according to ISO 16152; 5^{th} edition; 2005-07-01 at 25°C.

### d) Flex modulus

Flex Modulus is measured according to ISO 178 at 23 °C

### e) Charpy notched impact

Charpy notched impact strength is determined according to ISO 179/1eA at 23° C on injection moulded test specimens as described in EN ISO 1873-2 (80 × 10 × 4 mm).

### f) Haze

Haze is determined according to ASTM D1003 on injection moulded plaques having 1 mm thickness and 60x60 mm² area produced as described in EN ISO 1873-2.

### g) Comonomer content

### Poly(propylene-co-ethylene) - ethylene content by IR spectroscopy

Quantitative infrared (IR) spectroscopy was used to quantify the ethylene content of the poly(ethylene-co-propene) copolymers through calibration to a primary method.

Calibration was facilitated through the use of a set of in-house non-commercial calibration standards of known ethylene contents determined by quantitative ¹³C solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt% produced at either pilot or full scale under a variety of conditions. The calibration set was selected to reflect the typical variety of copolymers encountered by the final quantitative IR spectroscopy method.

Quantitative IR spectra were recorded in the solid-state using a Bruker Vertex 70 FTIR spectrometer. Spectra were recorded on 25x25 mm square films of 300 um thickness prepared by compression moulding at 180 - 210°C and 4 - 6 mPa. For samples with very high ethylene contents (>50 mol%) 100 um thick films were used. Standard transmission FTIR spectroscopy was employed using a spectral range of 5000-500 cm⁻¹, an aperture of 6 mm, a spectral resolution of 2 cm⁻¹, 16 background scans, 16 spectrum scans, an interferogram zero filling factor of 64 and Blackmann-Harris 3-term apodisation. Quantitative analysis was undertaken using the total area of the CH₂ rocking deformations at 730 and 720 cm⁻¹ (A_{Q}) corresponding to (CH₂)_{>2} structural units (integration method G, limits 762 and 694 cm⁻¹). The quantitative band was normalised to the area of the CH band at 4323 cm⁻¹ (A_{R}) corresponding to CH structural units (integration method G, limits 4650, 4007 cm⁻¹). The ethylene content in units of weight percent was then predicted from the normalised absorption (*A_{Q}* / *A_{R}*) using a quadratic calibration curve. The calibration curve having previously been constructed by ordinary least squares (OLS) regression of the normalised absorptions and primary comonomer contents measured on the calibration set.

### Poly(propylene-co-ethylene) - ethylene content for calibration using ¹³C NMR spectroscopy

Quantitative ¹³C{¹H} NMR spectra were recorded in the solution-state using a Bruker Avance III 400 NMR spectrometer operating at 400.15 and 100.62 MHz for ¹H and ¹³C respectively. All spectra were recorded using a ¹³C optimised 10 mm extended temperature probehead at 125°C using nitrogen gas for all pneumatics. Approximately 200 mg of material was dissolved in 3 ml of *1,2*-tetrachloroethane-*d₂* (TCE-*d₂*) along with chromium (III) acetylacetonate (Cr(acac)₃) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative ¹³C{¹H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: fE = ( E / ( P + E ) The comonomer fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to E = 0.5( Sββ + Sβγ + Sβδ + 0.5( Sαβ + Sαγ )) Through the use of this set of sites the corresponding integral equation becomes E = 0.5( I_{H} +I_{G} + 0.5( I_{C} + I_{D} )) using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction: E [mol%] = 100 * fE. The weight percent comonomer incorporation was calculated from the mole fraction: E [wt%] = 100 * ( fE * 28.06 ) / ( (fE * 28.06) + ((1-fE) * 42.08) ).

### h) Overall migration (OM)

Overall Migration is determined according to EN 1SO 1186-14:2002 on injection moulded plaques, 60 × 60 × 1 mm³

### i) Gamma sterilisation

Injection moulded test specimen of 80x10x4 mm3 for Charpy were prepared in accordance with EN ISO 1873-2 and exposed to gamma-ray irradiation at 50 kGy using a 60Co γ-ray source. Consecutively the samples were aged at 80°C in a circulating air oven up to 60 days as indicated below. Once the desired time was reached, the samples were taken out from the oven and aged at 23 °C for 24 hours before the impact test according to Charpy ISO I79/IeA+23°C was performed.

### II. Inventive and comparative examples

### a) Catalyst preparation

For the preparation of the catalyst 3.4 litre of 2-ethylhexanol and 810 ml of propylene glycol butyl monoether (in a molar ratio 4/1) were added to a 20.0 I reactor. Then 7.8 litre of a 20.0 % solution in toluene of BEM (butyl ethyl magnesium) provided by Crompton GmbH, were slowly added to the well stirred alcohol mixture. During the addition, the temperature was kept at 10.0 °C. After addition, the temperature of the reaction mixture was raised to 60.0 °C and mixing was continued at this temperature for 30 minutes. Finally after cooling to room temperature the obtained Mg-alkoxide was transferred to a storage vessel.

21.2 g of Mg alkoxide prepared above was mixed with 4.0 ml bis(2-ethylhexyl) citraconate for 5 min. After mixing the obtained Mg complex was used immediately in the preparation of the catalyst component.

19.5 ml of titanium tetrachloride was placed in a 300 ml reactor equipped with a mechanical stirrer at 25.0 °C. Mixing speed was adjusted to 170 rpm. 26.0 g of Mg-complex prepared above was added within 30 minutes keeping the temperature at 25.0 °C. 3.0 ml of Viscoplex^{®} 1-254 and 1.0 ml of a toluene solution with 2 mg Necadd 447^{™} was added. Then 24.0 ml of heptane was added to form an emulsion. Mixing was continued for 30 minutes at 25.0 °C, after which the reactor temperature was raised to 90.0 °C within 30 minutes. The reaction mixture was stirred for a further 30 minutes at 90.0 °C. Afterwards stirring was stopped and the reaction mixture was allowed to settle for 15 minutes at 90.0 °C. The solid material was washed 5 times: washings were made at 80.0 °C under stirring for 30 min with 170 rpm. After stirring was stopped the reaction mixture was allowed to settle for 20-30 minutes and followed by siphoning.
Wash 1: washing was made with a mixture of 100 ml of toluene and 1 ml donor
Wash 2: washing was made with a mixture of 30 ml of TiCl4 and 1 ml of donor.
Wash 3: washing was made with 100 ml of toluene.
Wash 4: washing was made with 60 ml of heptane.
Wash 5: washing was made with 60 ml of heptane under 10 minutes stirring. Afterwards stirring was stopped and the reaction mixture was allowed to settle for 10 minutes while decreasing the temperature to 70 °C with subsequent siphoning, followed by N₂ sparging for 20 minutes to yield an air sensitive powder.

### b) Inventive examples (IE1 and IE2)

Both the comparative and inventive composition contain a bimodal random propylene copolymer produced in a pilot plant with a prepolymerization reactor, one slurry loop reactor and one gas phase reactor. The solid catalyst component described above along with triethyl-aluminium (TEAL) as co-catalyst and dicyclo pentyl dimethoxy silane (D-donor) as external donor, were used.

The properties of the polymer is controlled by the ethylene polymer produced in each reactor, MFR and the split between the reactors. To achieve the desired polymer the concentration of H2 and C2 were adjusted appropriately. The typical polymerization process conditions and properties of the bimodal random propylene copolymer are described in Table 1.

The inventive and comparative polypropylene compositions were prepared by extruding the bimodal random propylene copolymer together with the additives as indicated in Table 2 in a co-rotating twin screw extruder type Coperion ZSK 40 (screw diameter 40 mm, L/D ratio 38). The temperatures in the extruder were in the range of 190-230 °C.

Following the extrusion step and after solidification of the strands in a water bath, the resulting polypropylene composition was pelletized in a strand pelletizer.

The polypropylene composition properties are described in Table 2.

LDPE is MA8200, which is commercially available from Borealis AG, Austria. It has an MFR₂ (190°C) of 7,5 g/10min and a density of 920 kg/m³.
AS is calcium stearate (CEASIT FI), supplied by Baerlocher, Germany;
Antioxidant is tris(2,4-di-tert.-butylphenyl)phosphite (Irgafos 168), supplied by BASF AG, Germany;
Hindered amine light stabilizer, HALS 1 is Tinuvin 622, an oligomeric piperidine type hindered amine light stabilizer supplied by BASF AG, Germany;
Hindered amine light stabilizer, HALS 2 is ADK STAB LA-87, a polymerizable methacrylate type hindered amine light stabilizer, supplied by ADEKA, Japan;
Nucleating agent is 1,3:2,4-Bis(3,4-dimethylobenzylideno) sorbitol (Millad 3988), purchased from Milliken, USA.

**Table 1. Polymerization process conditions and properties of the bimodal random propylene copolymer**

| | | **IE base** | **CE base** |
|---|---|---|---|
| Prepolymerizer | | | |
| T | °C | 30 | 30 |
| TEAL | g/T C3 | 140 | 140 |
| Donor | g/T C3 | 55 | 55 |
| Resisdence time | min | 20 | 20 |
| Loop | | | |
| T | °C | 70 | 68 |
| Split* | wt% | 53 | 79 |
| H2/C3 | mol/kmol | 6.7 | 4.0 |
| C2/C3 | mol/kmol | 4.1 | 6.5 |
| MFR2 | g/10min | 22 | 18.1 |
| C2 after loop | wt% | 0.8 | 3.1 |
| Gas phase reactor (GPR) | | | |
| T | °C | 80 | 80 |
| Split* | wt% | 47 | 21 |
| H2/C3 | mol/kmol | 65 | 74 |
| C2/C3 | mol/kmol | 40 | 27 |
| MFR2 | g/10min | 20 | 19.6 |
| C2 after GPR | wt% | 3.8 | 3.5 |
| MFR made in GPR | g/10min | 18 | 23 |
| C2 made in GPR | wt% | 7.2 | 5.0 |

| | | | |
|---|---|---|---|
| *Split relates to the amount of propylene polymer produced in each specific reactor. | | | |

**Table 2. Polypropylene composition and properties.**

| | | | | | **IE1** | **IE2** | **CE1** |
|---|---|---|---|---|---|---|---|
| Polymer (from Table 1) | | | | wt% | 99.5 | 99.45 | 97.5 |
| | | LDPE | | wt% | 0 | 0 | 2.0 |
| | | | AS | wt% | 0.05 | 0.05 | 0.05 |
| | Antioxidant | | | wt% | 0.1 | 0.1 | 0.1 |
| HALS 1 | | | | wt% | 0.15 | 0.15 | 0.15 |
| | | HALS 2 | | wt% | 0 | 0.05 | 0 |
| Nucleating agent | | | | wt% | 0.2 | 0.2 | 0.2 |

| **Composition properties*** | | | | | | | |
|---|---|---|---|---|---|---|---|
| MFR₂ | | | | [g/10min] | 20 | 20 | 20 |
| C₂ content | | | | [wt%] | 3.8 | 3.8 | n.m. |
| Flex Modulus | | | | [MPa] | 1032 | 1030 | 1031 |
| Charpy notched impact strength | | | | [kJ/m²] | 4.91 | 4.89 | 5.1 |
| Haze (1mm) | | | | [%] | 13.5 | 11.8 | 15.9 |
| OM | | | | [mg/dm²] | 9.23 | 8.65 | - |

| | | | | | | | |
|---|---|---|---|---|---|---|---|
| * measured on pellets obtained after the extrusion process. | | | | | | | |

From Table 2 it can be derived that the polypropylene compositions (inventive examples) show a balanced combination of high flowability, high stiffness and impact, and high level of optical properties (low haze value).

The results for notched impact strength measurements following gamma sterilisation are shown in Figure 1. The inventive examples have higher toughness after sterilization and during the entire test time range, indicating that they have improved gamma sterilization stability.

## Claims

1. A polypropylene composition comprising:
a) a bimodal random Ziegler-Natta propylene copolymer having a comonomer content of 2.0 to 4.5 wt.-%, said copolymer comprising:
(i) 30 to 70 wt.-% of a first propylene copolymer having a comonomer content in the range of 0.1 to 4.5 wt.-% relative to the total weight of the first propylene copolymer, and an MFR₂ of 1 to 100 g/10 min; and
(ii) 70 to 30 wt.-% of a second propylene copolymer having a comonomer content in the range of 1.0 to 15 wt.-% relative to the total weight of the second propylene copolymer, and an MFR₂ of 1 to 100 g/10 min;
with the proviso that the comonomer content of the second propylene copolymer (ii) is higher than for the first propylene copolymer (i); and
b) at least one hindered amine light stabiliser.

2. A polypropylene composition as claimed in claim 1, wherein the first propylene copolymer (i) and/or the second propylene copolymer (ii) is a copolymer of propylene and at least one comonomer selected from ethylene and C4-C10 alpha-olefins, preferably ethylene.

3. A polypropylene composition as claimed in claim 1 or 2, wherein the bimodal random propylene copolymer is a copolymer of propylene and at least one comonomer selected from ethylene and C4-C10 alpha-olefins, preferably ethylene.

4. A polypropylene composition as claimed in any of claims 1 to 3, wherein the at least one hindered amine light stabiliser is a compound containing at least one group of formula (I): 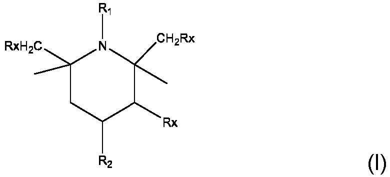
wherein R₁ and R₂ are optionally substituted organic substituents, preferably independently selected from the group consisting of hydrogen, hydroxyl, linear or branched alkyl groups, linear or branched alkenyl groups, aryl groups, linear or branched amine groups, linear or branched carboxylic acid groups, linear or branched ester groups and linear or branched ether groups; and
Rx is hydrogen or methyl.

5. A polypropylene composition as claimed in any of claims 1 to 4, wherein the at least one hindered amine light stabiliser is a compound of general formula (II) shown below: 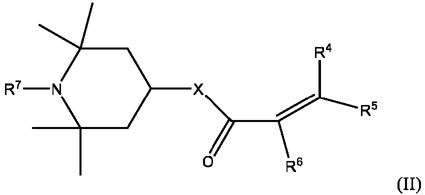
wherein
X is O, NH, or NR³, wherein R³ is C1-C8 alkyl;
R⁴, R⁵ and R⁶ are independently selected from the group consisting of H, C₁-C₈ alkyl, C₁-C₈ alkenyl and an optionally substituted C₆-C₁₂ aryl; and
R⁷ is H, C₁-C₈ alkyl, C₆-C₁₂ cycloalkyl, C₁-C₁₀ acyl, C₁-C₁₀ acyloxy or C₁-C₈ alkyl ether;
wherein the optional substituent(s) on the C₆-C₁₂ aryl group are C₁-C₈ hydrocarbon groups.

6. A polypropylene composition as claimed in any of claims 1 to 5, wherein the composition comprises a mixture of two hindered amine light stabilisers.

7. A polypropylene composition as claimed in any of claims 1 to 6, wherein the at least one hindered amine light stabiliser has a molecular weight Mw > 2000 g/mol.

8. A polypropylene composition as claimed in any of claims 1 to 7, further comprising an alpha-nucleating agent.

9. A polypropylene composition as claimed in any of claims 1 to 8, wherein said bimodal random propylene copolymer has an MFR₂ of 1.0 to 60 g/10 min.

10. A polypropylene composition as claimed in any of claims 1 to 9, wherein said composition has a melting temperature (Tₘ) of 150 to 165 °C.

11. A polypropylene composition as claimed in any of claims 1 to 10, wherein said composition is gamma sterilisable.

12. A process for producing a polypropylene composition as claimed in any of claims 1 to 11, said process comprising the steps:
a) polymerizing in a first reactor, preferably a slurry reactor, monomers comprising propylene and one or more comonomers selected from ethylene and C₄-C₁₀ alpha-olefins, to obtain a first propylene polymer fraction having a comonomer content in the range of 0.1 to 4.5 wt.-%,
b) polymerizing in a second reactor, preferably a gas-phase reactor, monomers comprising propylene and one or more comonomers selected from ethylene and C₄-C₁₀ alpha-olefins, in the presence of the first propylene polymer fraction, to obtain a second propylene polymer fraction having a comonomer content in the range of 1.0 to 15 wt.-%,
c) extruding the polymer fractions in the presence of at least one hindered amine light stabiliser;
wherein the polymerization is carried out in the presence of a Ziegler-Natta catalyst.

13. The process as claimed in claim 12, wherein the Ziegler-Natta catalyst is free of a phthalic compound.

14. The process as claimed in claim 12 or 13, wherein the process is operated in the presence of a Ziegler-Natta catalyst with a transition metal of group 4 to 6 of the periodic table, the catalyst comprising an internal donor, optionally a co-catalyst and optionally an external donor, wherein the internal donor is a non-phthalic internal donor, preferably wherein the non-phthalic internal donor is selected from (di)esters of non-phthalic carboxylic (di)acids wherein the (di)ester belongs to the group comprising malonates, maleates, succinates, citraconates, glutarates, cyclohexene-1,2-dicarboxylates and benzoates and derivatives thereof or mixtures thereof.

15. An article comprising the polypropylene composition according to any one of claims 1 to 11, wherein the article is preferably a cast film, an injection moulded article, a closure cap, a screw cap or a closure system for food or fluid packaging.

## Patentansprüche

1. Polypropylenzusammensetzung, umfassend:
a) ein bimodales statistisches Ziegler-Natta-Propylencopolymer mit einem Comonomergehalt von 2,0 bis 4,5 Gew.-%, wobei das Copolymer umfasst:
(i) 30 bis 70 Gew.-% eines ersten Propylencopolymers mit einem Comonomergehalt im Bereich von 0,1 bis 4,5 Gew.-%, bezogen auf das Gesamtgewicht des ersten Propylencopolymers, und einem MFR₂ von 1 bis 100 g/10 min; und
(ii) 70 bis 30 Gew.-% eines zweiten Propylencopolymers mit einem Comonomergehalt im Bereich von 1,0 bis 15 Gew.-%, bezogen auf das Gesamtgewicht des zweiten Propylencopolymers, und einem MFR₂ von 1 bis 100 g/10 min;
mit der Maßgabe, dass der Comonomergehalt des zweiten Propylencopolymers (ii) höher ist als der des ersten Propylencopolymers (i); und
b) mindestens einen Lichtstabilisator mit gehindertem Amin.

2. Polypropylenzusammensetzung nach Anspruch 1, wobei das erste Propylencopolymer (i) und/oder das zweite Propylencopolymer (ii) ein Copolymer aus Propylen und mindestens einem Comonomer ist, das aus Ethylen und C4-C10-Alpha-Olefinen, vorzugsweise Ethylen, ausgewählt ist.

3. Polypropylenzusammensetzung nach Anspruch 1 oder 2, wobei das bimodale statistische Propylencopolymer ein Copolymer aus Propylen und mindestens einem Comonomer ist, das aus Ethylen und C4-C10-Alpha-Olefinen, vorzugsweise Ethylen, ausgewählt ist.

4. Polypropylenzusammensetzung nach einem der Ansprüche 1 bis 3, wobei der mindestens eine Lichtstabilisator mit gehindertem Amin eine Verbindung ist, die mindestens eine Gruppe der Formel (I) enthält: 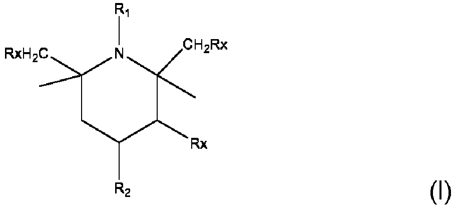 wobei R₁ und R₂ wahlweise substituierte organische Substituenten sind, die vorzugsweise unabhängig voneinander aus der Gruppe ausgewählt sind, die aus Wasserstoff, Hydroxyl, linearen oder verzweigten Alkylgruppen, linearen oder verzweigten Alkenylgruppen, Arylgruppen, linearen oder verzweigten Amingruppen, linearen oder verzweigten Carbonsäuregruppen, linearen oder verzweigten Estergruppen und linearen oder verzweigten Ethergruppen besteht; und Rx Wasserstoff oder Methyl ist.

5. Polypropylenzusammensetzung nach einem der Ansprüche 1 bis 4, wobei der mindestens eine Lichtstabilisator mit gehindertem Amin eine Verbindung der nachstehend gezeigten allgemeinen Formel (II) ist: 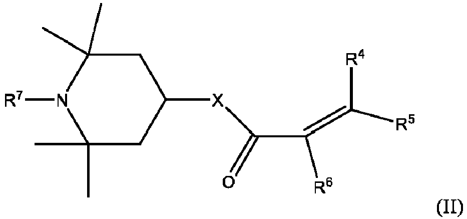 wobei
X O, NH oder NR³ ist, wobei R3 C1-C8-Alkyl ist;
R⁴, R⁵ und R⁶ unabhängig voneinander aus der Gruppe ausgewählt sind, die aus H, C₁-C₈-Alkyl, C₁-C₈-Alkenyl und einem wahlweise substituierten C₆-C₁₂-Aryl besteht; und
R⁷ H, C₁-C₈-Alkyl, C₆-C₁₂-Cycloalkyl, C₁-C₁₀-Acyl, C₁-C₁₀-Acyloxy oder C₁-C₈-Alkylether ist;
wobei der/die optionale(n) Substituent(en) an der C₆-C₁₂-Arylgruppe C₁-C₈-Kohlenwasserstoffgruppen sind.

6. Polypropylenzusammensetzung nach einem der Ansprüche 1 bis 5, wobei die Zusammensetzung eine Mischung aus zwei Lichtstabilisatoren mit gehindertem Amin umfasst.

7. Polypropylenzusammensetzung nach einem der Ansprüche 1 bis 6, wobei der mindestens eine Lichtstabilisator mit gehindertem Amin ein Molekulargewicht Mw > 2000 g/mol aufweist.

8. Polypropylenzusammensetzung nach einem der Ansprüche 1 bis 7, die weiter ein Alpha-Nukleierungsmittel umfasst.

9. Polypropylenzusammensetzung nach einem der Ansprüche 1 bis 8, wobei das bimodale statistische Propylencopolymer einen MFR₂ von 1,0 bis 60 g/10 min aufweist.

10. Polypropylenzusammensetzung nach einem der Ansprüche 1 bis 9, wobei die Zusammensetzung eine Schmelztemperatur (Tₘ) von 150 bis 165 °C aufweist.

11. Polypropylenzusammensetzung nach einem der Ansprüche 1 bis 10, wobei die Zusammensetzung gammasterilisierbar ist.

12. Prozess zum Herstellen einer Polypropylenzusammensetzung nach einem der Ansprüche 1 bis 11, wobei der Prozess die folgenden Schritte umfasst:
a) Polymerisieren, in einem ersten Reaktor, vorzugsweise einem Aufschlämmungsreaktor, von Monomeren, umfassend Propylen und ein oder mehrere Comonomere, ausgewählt aus Ethylen und C₄-C₁₀-Alpha-Olefinen, um eine erste Propylenpolymerfraktion mit einem Comonomergehalt im Bereich von 0,1 bis 4,5 Gew.-% zu erhalten,
b) Polymerisieren, in einem zweiten Reaktor, vorzugsweise einem Gasphasenreaktor, von Monomeren, umfassend Propylen und ein oder mehrere Comonomere, ausgewählt aus Ethylen und C₄-C₁₀-Alpha-Olefinen, in Gegenwart der ersten Propylenpolymerfraktion, um eine zweite Propylenpolymerfraktion zu erhalten, die einen Comonomergehalt im Bereich von 1,0 bis 15 Gew.-% aufweist,
c) Extrudieren der Polymerfraktionen in Gegenwart mindestens eines Lichtstabilisators mit gehindertem Amin;
wobei die Polymerisation in Gegenwart eines Ziegler-Natta-Katalysators ausgeführt wird.

13. Prozess nach Anspruch 12, wobei der Ziegler-Natta-Katalysator frei von einer Phthalsäureverbindung ist.

14. Prozess nach Anspruch 12 oder 13, wobei der Prozess in Gegenwart eines Ziegler-Natta-Katalysators mit einem Übergangsmetall von Gruppe 4 bis 6 des Periodensystems durchgeführt wird, wobei der Katalysator einen internen Donor, wahlweise einen CoKatalysator und wahlweise einen externen Donor umfasst, wobei der interne Donor ein nicht-phthalischer interner Donor ist, wobei der nicht-phthalische interne Donor vorzugsweise aus (Di)estern von nicht-phthalischen Carbon(di)säuren ausgewählt ist, wobei der (Di)ester zu der Gruppe gehört, die Malonate, Maleate, Succinate, Citraconate, Glutarate, Cyclohexen-1,2-dicarboxylate und Benzoate und Derivate davon oder Mischungen davon umfasst.

15. Artikel, umfassend die Polypropylenzusammensetzung nach einem der Ansprüche 1 bis 11, wobei der Artikel vorzugsweise eine gegossene Folie, ein spritzgegossener Artikel, eine Verschlusskappe, eine Schraubkappe oder ein Verschlusssystem für eine Nahrungsmittel- oder Fluidverpackung ist.

## Revendications

1. Composition de polypropylène, comprenant
a) un copolymère de propylène Ziegler-Natta statistique bimodal présentant une teneur en comonomère de 2,0 à 4,5 % en poids, ledit copolymère comprenant :
(i) 30 à 70 % en poids d'un premier copolymère de propylène présentant une teneur en comonomère dans la plage de 0,1 à 4,5 % en poids par rapport au poids total du premier copolymère de propylène, et un MFR₂ de 1 à 100 g/10 min ; et
(ii) 70 à 30 % en poids d'un second copolymère de propylène présentant une teneur en comonomère dans la plage de 1,0 à 15 % en poids par rapport au poids total du second copolymère de propylène, et un MFR₂ de 1 à 100 g/10 min ;
à condition que la teneur en comonomère du second copolymère de propylène (ii) soit plus élevée que celle du premier copolymère de propylène (i) ; et
b) au moins un photostabilisant à amine encombrée.

2. Composition de polypropylène selon la revendication 1, dans laquelle le premier copolymère de propylène (i) et/ou le second copolymère de propylène (ii) est un copolymère de propylène et d'au moins un comonomère choisi parmi l'éthylène et des alpha-oléfines en C4-C10, de préférence l'éthylène.

3. Composition de polypropylène selon la revendication 1 ou 2, dans laquelle le copolymère de propylène statistique bimodal est un copolymère de propylène et d'au moins un comonomère choisi parmi l'éthylène et des alpha-oléfines en C4-C10, de préférence l'éthylène.

4. Composition de polypropylène selon l'une quelconque des revendications 1 à 3, dans laquelle le au moins un photostabilisant à amine encombrée est un composé contenant au moins un groupe de formule (I) : 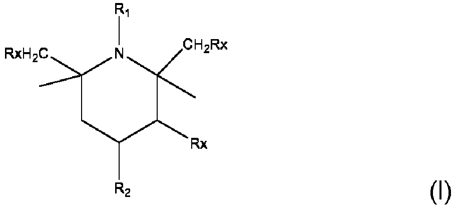 dans laquelle R₁ et R₂ sont des substituants organiques facultativement substitués, de préférence choisis indépendamment dans le groupe constitué par l'hydrogène, un hydroxyle, des groupes alkyle linéaires ou ramifiés, des groupes alcényle linéaires ou ramifiés, des groupes aryle, des groupes amine linéaires ou ramifiés, des groupes acide carboxylique linéaires ou ramifiés, des groupes ester linéaires ou ramifiés et des groupes éther linéaires ou ramifiés ; et Rx est l'hydrogène ou un méthyle.

5. Composition de polypropylène selon l'une quelconque des revendications 1 à 4, dans laquelle le au moins un photostabilisant à amine encombrée est un composé de la formule générale (II) représentée ci-dessous : 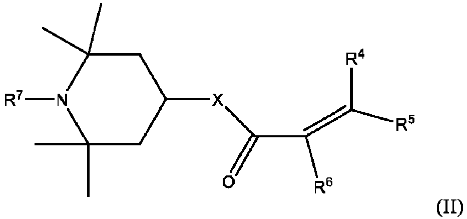 dans laquelle
X est O, NH ou NR³, dans laquelle R3 est un alkyle en C1-C8 ;
R⁴, R⁵ et R⁶ sont choisis indépendamment dans le groupe comprenant H, un alkyle en C₁-C₈, un alcényle en C₁-C₈ et un aryle en C₆-C₁₂ facultativement substitué ; et
R⁷ est H, un alkyle en C₁-C₈, un cycloalkyle en C₆-C₁₂, un acyle en C₁-C₁₀, un acyloxy en C₁-C₁₀ ou un alkyléther en C₁-C₈ ;
dans laquelle le ou les substituants facultatifs sur le groupe aryle en C₆-C₁₂ sont des groupes hydrocarbonés en C₁-C₈.

6. Composition de polypropylène selon l'une quelconque des revendications 1 à 5, dans laquelle la composition comprend un mélange de deux photostabilisants à amine encombrée.

7. Composition de polypropylène selon l'une quelconque des revendications 1 à 6, dans laquelle le au moins un photostabilisant à amine encombrée présente un poids moléculaire Mw > 2000 g/mol.

8. Composition de polypropylène selon l'une quelconque des revendications 1 à 7, comprenant en outre un agent d'alpha-nucléation.

9. Composition de polypropylène selon l'une quelconque des revendications 1 à 8, dans laquelle ledit copolymère de propylène statistique bimodal présente un MFR₂ de 1,0 à 60 g/10 min.

10. Composition de polypropylène selon l'une quelconque des revendications 1 à 9, dans laquelle ladite composition présente une température de fusion (Tₘ) de 150 à 165°C.

11. Composition de polypropylène selon l'une quelconque des revendications 1 à 10, dans laquelle ladite composition est stérilisable aux rayons gamma.

12. Procédé de production d'une composition de polypropylène selon l'une quelconque des revendications 1 à 11, ledit procédé comprenant les étapes consistant à :
a) polymériser, dans un premier réacteur, de préférence un réacteur à boues liquides, des monomères comprenant du propylène et un ou plusieurs comonomères choisis parmi l'éthylène et des alpha-oléfines en C₄-C₁₀, pour obtenir une première fraction de polymère de propylène présentant une teneur en comonomère dans la plage de 0,1 à 4,5 % en poids,
b) polymériser, dans un second réacteur, de préférence un réacteur à phase gazeuse, des monomères comprenant du propylène et un ou plusieurs comonomères choisis parmi l'éthylène et des alpha-oléfines en C₄-C₁₀, en présence de la première fraction de polymère de propylène, pour obtenir une seconde fraction de polymère de propylène présentant une teneur en comonomère située dans la plage de 1,0 à 15 % en poids,
c) extruder les fractions de polymère en présence d'au moins un photostabilisant à amine encombrée ;
dans lequel la polymérisation est réalisée en présence d'un catalyseur Ziegler-Natta.

13. Procédé selon la revendication 12, dans lequel le catalyseur Ziegler-Natta est exempt de composé phtalique.

14. Procédé selon la revendication 12 ou 13, dans lequel le procédé est mis en œuvre en présence d'un catalyseur Ziegler-Natta avec un métal de transition du groupe 4 à 6 du tableau périodique, le catalyseur comprenant un donneur interne, facultativement un co-catalyseur et facultativement un donneur externe, dans lequel le donneur interne est un donneur interne non phtalique, de préférence dans lequel le donneur interne non phtalique est choisi parmi des (di)esters de (di)acides carboxyliques non phtaliques, dans lequel le (di)ester appartient au groupe comprenant des malonates, des maléates, des succinates, des citraconates, des glutarates, des cyclohexène-1,2-dicarboxylates et des benzoates, et des dérivés ou des mélanges de ceux-ci.

15. Article comprenant la composition de polypropylène selon l'une quelconque des revendications 1 à 11, dans lequel l'article est, de préférence, un film coulé, un article moulé par injection, un bouchon de fermeture, un bouchon fileté ou un système de fermeture pour un emballage alimentaire ou de fluide.
